# EUROPÄISCHE PATENTANMELDUNG

(11) **EP 0 976 970 A2**
(43) Veröffentlichungstag der Anmeldung: **02.02.2000**
(21) Anmeldenummer: 99112400.9
(22) Anmeldetag: 28.06.1999
(51) Int. Cl.: F21S 2/00

(54) **Leuchtelement in beliebiger geometrischer Form**

(30) Priorität: 29.06.1998 DE 29811602 U
(71) Anmelder: Verwaltungsgesellschaft Süd mbH, 01279 Dresden (DE)
(72) Erfinder: Ballhaus, Raymund, 01279 Dresden (DE); Bachmann, Ralf, 01279 Dresden (DE)
(74) Vertreter: Weissfloh, Ingo

(57) **Zusammenfassung**

Der Erfindung liegt das Problem zugrunde, Leuchtelemente in beliebiger geometrischer Form, insbesondere flächige Leuchtelemente aus lichtdurchlässigem bzw. teilweise lichtdurchlässigem Material, insbesondere für Werbezwecke zu schaffen.

Auf der flachen Seite des Leuchtelementes, z. B. ein Grundelement 1 in der Form eines Acrylglasbuchstaben, sind entsprechend des gewünschten Werbeeffektes Frässchnitte 2 und/oder Bohrungen angeordnet, in die elektrolumineszierende Leuchtmittel oder Kaltkathodenröhren eingelegt sind.

Das Anwendungsgebiet der Erfindung ist die Lichtwerbung.

## Beschreibung

Leuchtelement in beliebiger geometrischer Form, insbesondere flächige Leuchtelemente aus lichtdurchlässigem bzw. teilweise lichtdurchlässigem Material, insbesondere für Werbezwecke.

### Stand der Technik

Es gibt eine Vielzahl von flächigen Leuchtwerbeelementen bzw. Leuchtelementen. So wird z. B. in der DE G 94 07 820.3 eine flächig ausgebildete Lichtquelle, die von einer Trägerfolie gehalten wird und von zwei durchsichtigen Flächen umgeben ist; an Kleidungsstücken bzw. am Schutzblech eines Fahrrades beschrieben.

Aber auch eingearbeitete Lumineszenz-Folien am schmalen Rand von flächigen Leuchtkästen oder -platten sind bekannt. In der DE G 94 19 248.0 ist solch eine Anordnung beschrieben. Dabei werden in das sogenannte Leuchtschild auf der Vorderfläche Werbezeichen, z. B. Buchstaben, unterschiedlich tief eingearbeitet.

Alle diese Ausführungen stellen spezielle Anwendungen dar und gestatten Lichteffekte für Werbezwecke bzw. sollen die Aufmerksamkeit auf spezielle Objekte lenken.

### Problem

Der Erfindung liegt das Problem zugrunde, Leuchtelemente in beliebiger geometrischer Form, insbesondere flächige Leuchtelemente aus lichtdurchlässigem bzw. teilweise lichtdurchlässigem Material, insbesondere für Werbezwecke zu schaffen.

### Erzielbare Vorteile

Die mit der Erfindung erzielbaren Vorteile bestehen insbesondere darin, neben der sehr flachen Bauweise beliebig Größen und geometrische Formen, z. B. auch sehr kleine Formen oder auch beliebige dreidimensionale Leuchtelemente realisierbar sind. Das Leuchtmittel ist gegenüber Erschütterungen weitestgehend unempfindlich. Das Leuchtmittel ist im Leuchtelement mit integriert. Damit entfallen zusätzliche mechanische Abdeckungen. Der Energieverbrauch dieser Leuchtelemente ist sehr gering. Nachträglich kann die Abstrahlrichtung des Lichtes geändert werden. Weiterhin kann nachträglich die Leuchtfarbe verändert werden, indem Farbfolien oder - filter auf dem Grundelement aufgebracht werden oder indem eine Lackierung der Oberfläche des Grundelementes erfolgt. 3 D- bzw. Holographieeffekte lassen sich durch Anbringung entsprechender Lichtleitfolien vor dem Leuchtkörper erreichen. Es lassen sich sehr leicht große Schriftzüge, die montagefertig zum Einsatzort gebracht werden, oder wasserdichte Leuchtelemente realisieren.

### Weitere Ausgestaltung der Erfindung

Vorteilhafte Ausgestaltungen der Erfindung sind in den Ansprüchen 2 bis 11 aufgeführt. Die Weiterbildungen nach den Ansprüchen 2 und 3 dienen der Isolation des Leuchtmittels gegenüber der Umwelt. Die Weiterbildung nach Anspruch 4 ermöglicht einen zielgerichteten Lichtaustritt aus dem Leuchtelement und damit besondere Werbeeffekte. Die Weiterbildung nach Anspruch 5 ermöglicht den diffusen Lichtaustritt. Die Befestigung des Leuchtelementes z. B. an einer Wand kann nach Anspruch 6 durch entsprechende Befestigungselemente am Grundelement oder auch an der Abdeckplatte erfolgen. Die Weiterbildung nach Anspruch 7 realisiert den elektrischen Anschluß des elektrolumineszierenden Leuchtmittels. Die Weiterbildung nach Anspruch 8 bewirkt einen 3 D-Effekt am Leuchtelement Durch die Anordnung einer Zwischenplatte nach Anspruch 9 werden weitere besondere Werbeeffekte erreicht und gleichzeitig ergeben sich Vorteile bei dem Herstellungsverfahren der im Material benötigten Schlitze. Bei den Weiterbildungen nach Anspruch 10 und 11 werden zusätzliche Lichteffekte durch die speziell eingesetzten Materialien erreicht so z. B. beim Einsatz eines lichtstreuenden Acrylglases als Zwischenplatte.

### Ausführungsbeispiele

Mehrere Ausführungsbeispiele sind in der Zeichnung dargestellt und werden im folgenden einschließlich der Herstellungsverfahren näher beschrieben.

Es zeigen
Fig. 1 ein Grundelement mit verschiedenen Frässchnitten in der Draufsicht und
Fig. 2 die Draufsicht eins Grundelementes, eines Zwischenelementes mit durchgehenden Schnitten und einer Deckplatte in der Reihenfolge ihres Zusammenbaus.
Fig. 3 die Draufsicht auf ein Grundelement; auf eine Zwischenplatte, auf eine Abdeckplatte und auf ein Abstandselement.
Fig. 4 die Draufsicht auf ein Grundelement mit einem Hohlraum für das Leuchtmittel und
Fig. 5 die Seitenansicht eines Grundelementes mit einem Frässchnitt.

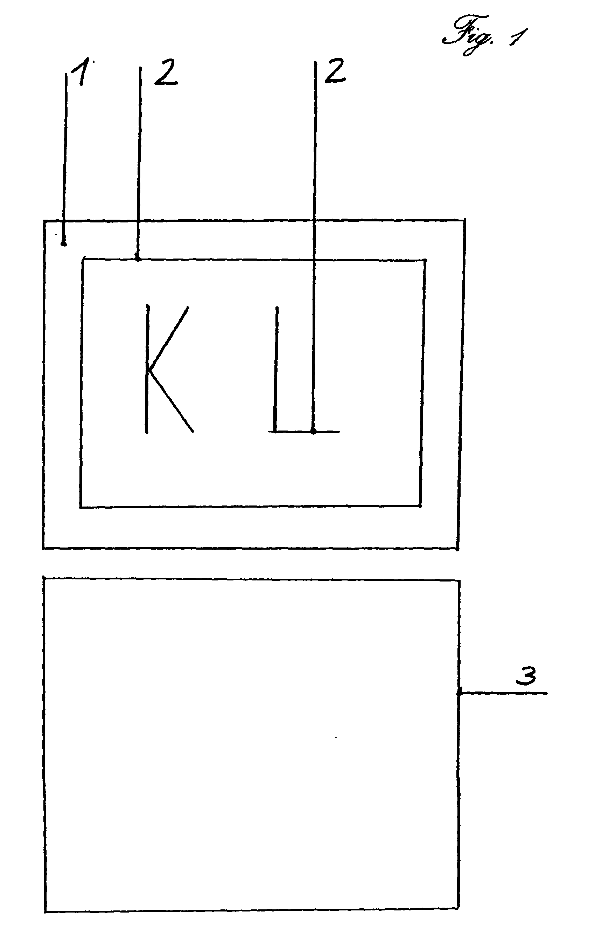

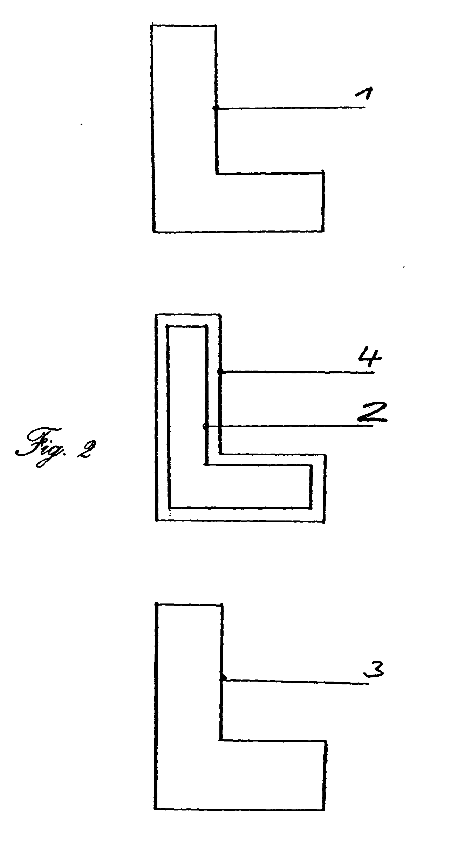

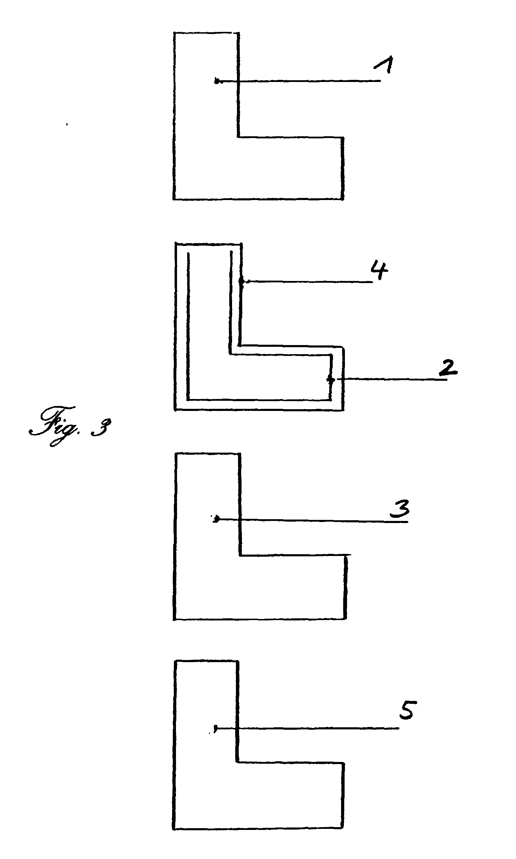

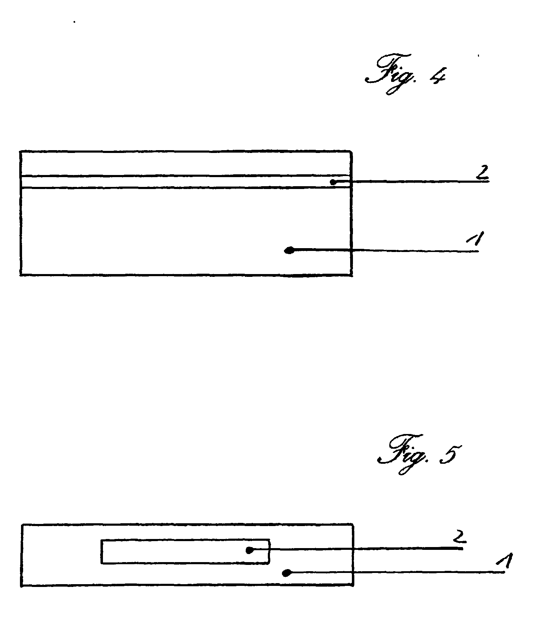

Die einfachste Ausführung des erfindungsgemäßen Leuchtelementes besteht aus einem lichtdurchlässigen Material, wie z. B. Acrylglas. Die Grundform wird entsprechend der später gewünschten Ausführungsform aus dem Material herausgearbeitet Dies stellt das sogenannte Grundelement 1 dar. Auf einer flachen Seite des Grundelements 1 werden schmale Frässchnitte 2 entsprechend des gewünschten Lichteffekts, wie z. B. in Fig. 1 dargestellt; als Buchstaben mit einem Rahmen eingearbeitet. In diese Frässchnitte 2 werden elektrolumineszierende Leuchtmittel in Folienform oder als Leuchtschnüre eingelegt. Diese Frässchnitte 2 können zur Isolation gegenüber der Umwelt mit Kunstharz vergossen werden oder es wird eine Abdeckplatte 3 oder Folie aufgelegt. Im einfachsten Fall bleiben die Frässchnitte 2 mit dem Leuchtmittel jedoch offen. Die Frässchnitte können auch durch Bohrungen 6 oder Hohlräume 6 ersetzt werden. Dies wird z. B. in dem Fall des Einsatzes von Kaltkathodenröhren als Leuchtmittel sinnvoll sein.

Die zweite Ausführungsvariante besteht aus einem Grundelement 1, einer Zwischenplatte 4 und einer Abdeckplatte 3. Die Zwischenplatte 4 erhält dabei vorzugsweise durchgehende Schlitze, in die das elektrolumineszierende Leuchtmittel eingelegt wird. Die durchgehenden Schlitze lassen sich durch unterschiedlichste Herstellungsverfahren, wie z. B. durch Laser- oder Hochdruckwasserstrahltechnik, leicht herausarbeiten. Durch diese Dreiteilung lassen sich noch zusätzlich neben der erfindungsgemäßen Gestaltung der Lichteffekte auch die bereits bekannte flächige Gestaltung mittels Leuchtfolien zwischen zwei Teilen realisieren. Über das Grundelement 1 oder über die Abdeckplatte 3 wird die elektrische Verbindung zum elektrolumineszierenden Leuchtmittel hergestellt. Dies kann durch eingearbeitete Kabeldurchführungen erfolgen. Dies können jedoch auch entsprechend angeordnete und eingearbeitete Kontakte realisieren. Die Zwischenplatte 4 kann auch aus einem schwach lichtstreuenden Acrylglas bestehen. Dazu muß jedoch noch zusätzlich vor und hinter der Zwischenplatte 4 jeweils ein Abstandselement 5 angeordnet sein. Bei der Verwendung breiter elektrolumineszierender Leuchtmittel ist es sinnvoll, daß die durchgehenden Schlitze durch die Zwischenplatte 4 auch durch die Abstandselemente 5 gehen und in dem Grundelement 1 und in der Abdeckplatte 3 durch entsprechende Frässchnitte 2 fortgesetzt sind. Das Leuchtelement erhält dadurch eine wesentlich größere Tiefe und es können breitere Leuchtmittel eingesetzt werden.

Zur Erzielung weiterer Effekte kann die Oberfläche des Grundelementes 1 oder der Abdeckplatte 3 aufgerauht werden. Es wird in diesem Fall ein diffuser Lichtaustritt erreicht. Die Oberfläche kann auch teilweise mit einem lichtundurchlässigen Material abgedeckt werden. Dadurch wird ein zielgerichteter Lichtaustritt ermöglicht Dieses lichtundurchlässige Material kann auch wieder durch Schlitze oder andere Formen unterbrochen sein. Die Verwendung von Reflexfolien oder das Hinterlegen von reflektierenden Materialien kann den Lichtaustritt in die gewünschte Richtung verstärken.

## Patentansprüche

1. Leuchtelement in beliebiger geometrischer Form, insbesondere flächiger Leuchtelemente aus lichtdurchlässigem bzw. teilweise lichtdurchlässigem Material,
dadurch gekennzeichnet,
daß auf einer flachen Seite des Leuchtelements, dem sogenannten Grundelement (1), Frässchnitte (2) und/oder Bohrungen oder Hohlräume (6) entsprechend des gewünschten Lichteffekts angeordnet sind, in die elektrolumineszierende Leuchtmittel oder Kaltkathodenröhren eingelegt sind.

2. Leuchtelement nach Anspruch 1,
dadurch gekennzeichnet,
die Frässchnitte (2) mit dem Leuchtmittel mit Kunstharz ausgegossen sind.

3. Leuchtelement nach Anspruch 1 und 2,
dadurch gekennzeichnet,
daß das Grundelement (1) auf der Seite der Frässchnitte (2) mit einer Abdeckplatte (3) oder mit einer Folie abgedeckt ist

4. Leuchtmittel nach Anspruch 1 bis 3,
dadurch gekennzeichnet,
daß das Grundelement (1) an seiner Oberfläche teilweise Abdeckungen aus lichtundurchlässigem Material besitzt.

5. Leuchtelement nach Anspruch 1 und 4,
dadurch gekennzeichnet,
daß das Grundelement (1) an der Lichtaustrittsseite aufgerauht ist.

6. Leuchtelement nach Anspruch 1 bis 5,
dadurch gekennzeichnet,
daß am Grundelement (1) und/oder an der Abdeckplatte (3) Befestigungselemente angeordnet sind.

7. Leuchtelement nach Anspruch 1 bis 6,
dadurch gekennzeichnet,
daß das Grundelement (1) oder die Abdeckplatte (3) Stromkabeldurchführungen oder eingearbeitete Steckkontakte für das Leuchtmittel besitzt.

8. Leuchtelement nach Anspruch 1 bis 8,
dadurch gekennzeichnet,
daß auf der Vorderseite des Grundelementes (1) eine Lichtleitfolie befestigt ist.

9. Leuchtelement nach Anspruch 1 bis 8,
dadurch gekennzeichnet,
daß zwischen dem Grundelement (1) und der Abdeckplatte (3) eine Zwischenplatte (4) mit durchgehenden Schnitten, in die ebenfalls Leuchtmittel eingelegt sind, angeordnet ist.

10. Leuchtelement nach Anspruch 1 bis 9,
dadurch gekennzeichnet,
daß auf dem Grundelement (1) aus reflektierendem Material ein Abstandselement (5), auf dem Abstandselement (5) eine Zwischenplatte (4) bestehend aus einem lichtstreuenden Acrylglas mit durchgehenden Schnitten, auf der Zwischenplatte (4) ein weiteres Abstandselement (5) und darauf eine Abdeckplatte (3) angeordnet ist, wobei alle Einzelteile die gleiche geometrische Form besitzen.

11. Leuchtelement nach Anspruch 10,
dadurch gekennzeichnet,
daß die Abstandselemente (5) ebenfalls durchgehende Schlitze an gleicher Stelle wie die Zwischenplatte (4) besitzen, das Grundelement (1) und die Abdeckplatte Frässchnitte an gleicher Stelle besitzen und in die Schlitze und Frässchnitte ein elektrolumineszierendes Leuchtmittel oder Kaltkathodenröhren eingelegt sind.
